Europäisches Patentamt

European Patent Office

Office européen des brevets

(19)

(11) Veröffentlichungsnummer: **0 455 047 A2**

## (12) EUROPÄISCHE PATENTANMELDUNG

(21) Anmeldenummer: 91106138.0

(51) Int. Cl.⁵: **B29C 45/17**

(22) Anmeldetag: 17.04.91

(30) Priorität: 02.05.90 DD 340260

(43) Veröffentlichungstag der Anmeldung:
**06.11.91 Patentblatt 91/45**

(84) Benannte Vertragsstaaten:
**AT CH DE FR GB IT LI**

(71) Anmelder: **PLASTMASCHINENWERK
SCHWERIN GmbH
Werkstrasse 2
O-2781 Schwerin-Sued(DE)**

(72) Erfinder: **Rademacher, Frank, Dipl.-Ing.
Keplerstrasse 22
O-2794 Schwerin(DE)**
Erfinder: **Zacharias, Fredo, Dipl.-Ing.
Carl-Moltmann-Strasse 3
O-2711 Barnin(DE)**

(74) Vertreter: **Füchsle, Klaus, Dipl.-Ing. et al
Hoffmann . Eitle & Partner Patentanwälte
Arabellastrasse 4
W-8000 München 81(DE)**

(54) **Einrichtung zum horizontalen Zentrieren und selbsthemmenden Spannen von Formwerkzeugen.**

(57) Die Erfindung betrifft eine Einrichtung zum horizontalen Zentrieren und selbsthemmenden Spannen von Formwerkzeugen, die in horizontaler oder vertikaler Arbeitslage horizontal oder vertikal in den Werkzeugraum einer Spritzgießmaschine eingebracht werden, der von einer festen und einer beweglichen Werkzeugaufspannplatte (1) begrenzt wird. Durch Säulen (2) sind die Werkzeugaufspannplatten (1) verbunden bzw. verbindbar und durch Antriebe (10) bewegte Spannkeile (4) werden die Formwerkzeuge (3, 11) lösbar befestigt. Aufgabe der Erfindung ist es, eine Lösung zu schaffen, bei der während des Werkzeugwechsels die Werkzeugaufspannplatten (1) und die Formwerkzeuge (3, 11) keine herausragenden Zentrier- und Spannelemente besitzen. Dazu werden mindestens vier Spannkeile (4) unter einem Neigungswinkel α in den Werkzeugaufspannplatten parallel zu zwei gegenüberliegenden Außenkanten im Rastermaß des Euromap-Bohrbildes bündig zur Aufspannfläche (7) eingelassen. An den Aufspannflächen der Formwerkzeuge (3) bzw. der Adapterplatten (11) sind mindestens zwei Keilnuten (8) unter dem gleichen Neigungswinkel parallel zu jeder Außenkante der Werkzeugaufspannplatten (1) so angeordnet, daß die durch Antriebe (10) ausfahrbaren Spannkeile in die Keilnuten einfahrbar sind. Von Vorteil ist die Anordnung der Spannkeile (4) und Antriebe (10) in Bausteinen (9), die ihrerseits in den Werkzeugaufspannplatten (1) eingelassen sind.

Fig. 3

EP 0 455 047 A2

Die Erfindung betrifft eine Einrichtung zum horizontalen Zentrieren und selbsthemmenden Spannen von Formwerkzeugen, die in horizontaler oder vertikaler Arbeitslage horizontal oder vertikal in den Werkzeugraum einer Spritzgießmaschine eingebracht werden, der von einer festen und einer beweglichen Werkzeugaufspannplatte begrenzt wird. Durch in den Werkzeugaufspannplatten gelagerte Säulen sind diese miteinander verbindbar oder verbunden und durch Antriebe bewegte Spannkeile, die in den Werkzeugaufspannnplatten eingelassen sind, werden die Formwerkzeuge an den Werkzeugaufspannplatten lösbar befestigt.

Aus der Literatur sind adaptive und integrierte Zentrier- und Spanneinrichtungen zum Befestigen der Formwerkzeuge an den Werkzeugaufspannplatten bekannt. Beide Spannsysteme haben sich in der Praxis bewährt, weisen jedoch unter dem Gesichtspunkt eines flexiblen automatischen Werkzeugwechsels unterschiedliche Nachteile auf.

Aus der DD PS 250.495 und der EP PS 0092.686 sind Einrichtungen zum adaptiven Zentrieren und Spannen von Formwerkzeugen an Werkzeugaufspannplatten bekannt. Die Spannzylinder für das Formwerkzeug sind auf der festen und der beweglichen Werkzeugaufspannplatte unten und oben, vorzugsweise nach einer Euromap-Standardempfehlung, angeordnet. Ein wesentlicher Nachteil besteht darin, daß die Einbringmöglichkeiten für das Formwerkzeug in den Werkzeugraum der Spritzgießmaschine eingeschränkt sind. So ist nach der oben beschriebenen Anordnung der Spannelemente nur ein horizontaler Wechsel der Formwerkzeuge aber kein vertikaler Wechsel möglich. Bei der in der EP PS 0092.686 ferner beschriebenen seitlichen Anordnung der Spannzylinder für den vertikalen Wechsel der Formwerkzeuge ist zu verzeichnen, daß die seitlich angeordneten und hervorstehenden Spannelemente einen horizontalen Werkzeugwechsel verhindern.

Sollte entgegen einer traditionellen Arbeitsweise der Wechsel aus einer Richtung erfolgen, die der Anordnung der Spannelemente widerspricht und technisch durch bekannte Säulenzieheinrichtungen realisierbar sein, dann sind die Spannelemente durch entsprechende Transportabläufe zu umfahren. Dadurch vergrößert sich jedoch der materielle Aufwand und es steigt der Zeitfond für den gesamten Werkzeugwechselvorgang. Desweiteren müssen mäßlich Einschränkungen hingenommen werden, die zwar durch linear verstellbare Spannelemente, wie aus der DE PS 3201.024 bekannt, kompensierbar sind, letztlich jedoch die Aufwendungen erheblich steigern. Ferner ist bei adaptiven Spannelementen nur die Möglichkeit vorhanden, Spannkräfte zu erzeugen, die das Formwerkzeug an den Werkzeugaufspannplatten festhalten. Das geschieht durch die Auswahl eines Selbsthemmung garantierenden Spannwinkels. Die Spannelemente sind jedoch nicht in der Lage eine zentrierende Funktion auszuüben. Dazu ist in der Praxis am Formwerkzeug ein geringfügig herausragender Zentrierring befestigt oder es sind im Werkzeugraum Festanschläge angeordnet. Von Nachteil ist dabei, daß bei der Durchführung von Werkzeugbewegungen im Werkzeuglager oder im Werkzeugraum der Spritzgießmaschine Beschädigungen am Zentrierring oder an den Festanschlägen nicht vermeidbar sind.

Bei integrierten Spannsystemen befinden sich die Wirkmechanismen der Spannelemente sowohl innerhalb als auch außerhalb der Werkzeugaufspannplatte mit meistens stirnseitig angeordneten Antrieben (Krafterzeugern). Aus der DE PS 3213.209 ist eine derartige Lösung bekannt, deren wesentlicher Nachteil darin besteht, daß die Spannelemente aus der Werkzeugaufspannplatte herausragen und Ausnehmungen zur genauen Führung des Formwerkzeuges besitzen. Ein weiterer entscheidender Nachteil ist, daß diese Anordnung, die auf adaptive Spannkonturen zurückgreift, nur das Wechseln aus einer, vorzugsweise der horizontalen Richtung erlaubt.

Eine andere integrierte Spanneinrichtung ist in der "Engel-Information" A-67-TV-9/81, der Fa. Ludwig Engel KG beschrieben, bei der die Spannbolzen fest mit dem Formwerkzeug verbunden sind und sich beiderseits des Formwerkzeuges in Schließrichtung der Werkzeugaufspannplatten erstrecken.

Die zu der DE PS 3213.209 genannten Nachteile treffen auch für diese Lösung zu. Weitere Nachteile sind, daß die Positionierung des Formwerkzeuges beim vertikalen Werkzeugwechsel schwierig ist, da infolge der herausragenden Spannzapfen eine exakte Führung notwendig ist. Dazu sind ein entsprechender Abstand zwischen Formwerkzeug und Werkzeugaufspannplatte und komplizierte Führungselemente erforderlich. Ferner besteht die Gefahr, daß die Spannzapfen beim Absenken des Formwerkzeuges in den Werkzeugraum der Spritzgießmaschine beschädigt werden können. Die quadratische Anordnung der Spannbolzen ermöglicht zwar eine horizontale oder vertikale Lage des Formwerkzeuges im Werkzeugraum der Spritzgießmaschine. Von Nachteil ist jedoch, daß bei Veränderung der Arbeitslage des Formwerkzeuges die Spannbolzen um 90° verstellt werden müssen.

Ziel der Erfindung ist es, für flexible Fertigungssysteme bei Spritzgießmaschinen eine technisch-ökonomisch kostengünstige und funktionssichere Zentriereinrichtung, sowie eine selbsthemmend wirkende Spanneinrichtung für den vertikalen und den horizontalen Werkzeugwechsel zu schaffen, die eine Umrüstung der Zentrier- und Spannelemente beim Wechsel der Einbringrichtung oder beim Wechsel der Arbeitslage des Formwerkzeuges nicht erfordert.

Aufgabe der Erfindung ist es, eine Zentriereinrichtung und selbsthemmend wirkende Spanneinrichtung für den Werkzeugwechsel bei Spritzgießmaschinen zu entwickeln, bei der die Formwerkzeuge in horizontaler und vertikaler Arbeitslage und bei horizontaler oder vertikaler Einbringrichtung an den sich berührenden Aufspannflächen zwischen Formwerkzeug und Werkzeugaufspannnplatte, während des Werkzeugwechsels keine herausragenden Zentrier- oder Spannelemente besitzen. Erfindungsgemäß wird die Aufgabe dadurch gelöst, daß mindestens vier Spannkeile unter einem Neigungswinkel α in den Werkzeugaufspannplatten parallel zu zwei gegenüberliegenden Außenkanten im Rastermaß des Euromap-Bohrbildes bündig zur Aufspannfläche eingelassen sind. An den Aufspannflächen der Formwerkzeuge bzw. der Adapterplatten sind mindestens zwei Keilnuten unter dem gleichen Neigungswinkel parallel zu jeder Außenkante der Werkzeugaufspannplatten so angeordnet, daß die durch Antriebe ausfahrbaren Spannkeile in die Keilnuten einfahrbar sind. In der weiteren Ausgestaltung der Erfindung sind die Spannkeile und die Antriebe in quaderförmigen Bausteinen integriert, die parallel zu den Außenkanten der Werkzeugaufspannplatten bündig zur Aufspannfläche darin befestigt sind.

Zur Erreichung einer selbsthemmenden Spannwirkung sind die Keilspannflächen an den Spannkeilen um einen Neigungswinkel β von ca 5° zur Verschieberichtung geneigt. Für die Gewährleistung der Zentrierung und eines optimalen Spannvorganges der Formwerkzeuge sind die Keilspannflächen der Spannkeile und der Keilnuten vorzugsweise unter einem Neigungswinkel α, der im Bereich von ca 45° liegt, zu den Werkzeugaufspannplatten geneigt.

Die Vorteile der erfindungsgemäßen Lösung bestehen darin, daß die Formwerkzeuge und die Werkzeugaufspannplatten während des Werkzeugwechsels keine herausragenden Zentrier- oder Spannelemente besitzen. Dadurch ist es möglich, in Abhängigkeit von den günstigsten technologischen Bedingungen, den Werkzeugwechsel bei Formwerkzeugen in horizontaler oder vertikaler Arbeitslage und in horizontaler oder vertikaler Einbringrichtung durchzuführen. Die Anordnung der Keilnuten in den Formwerkzeugen bzw. Adapterplatten parallel zu den Außenkanten der Werkzeugaufspannplatten, ermöglicht es ferner, daß bei Veränderung der Arbeitslage oder der Einbringrichtung im Rahmen des Werkzeugwechsels ein Umrüsten der in den Werkzeugaufspannplatten integrierten Spannkeile nicht erforderlich ist. Desweiteren gewährleistet die erfindungsgemäße Spanneinrichtung die horizontale Selbstzentrierung aus einer vorzentrierten Position, die durch die räumliche Anordnung der Spannkeile und deren zentrierend wirkende Kraftkomponenten ermöglicht wird.

Nachstehend wird die Erfindung in einem Ausführungsbeispiel näher erläutert. In den zugehörigen Zeichnungen sind dargestellt

Fig. 1    Werkzeugaufspannplatte mit integrierten Bausteinen und mit im Halbschnitt dargestellten Formwerkzeug in der Vorderansicht, das sich in waagerechter Arbeitslage befindet.

Fig. 2    Seitenansicht von Fig. 1

Fig. 3    Vergrößerte Darstellung eines integrierten Bausteines im Längsschnitt mit Spannkeil, Spannzylinder, Formwerkzeug und Werkzeugaufspannplatte.

Fig. 4    Schematische Darstellung des Spannvorganges in drei Stufen.

Fig. 5    Schematische Darstellung der Kraftverteilung beim Spannvorgang.

Fig. 6    Werkzeugaufspannplatte gemäß Figur 1 mit in senkrechter Arbeitslage angeordnetem Formwerkzeug.

Fig. 7    Seitenansicht von Fig. 6.

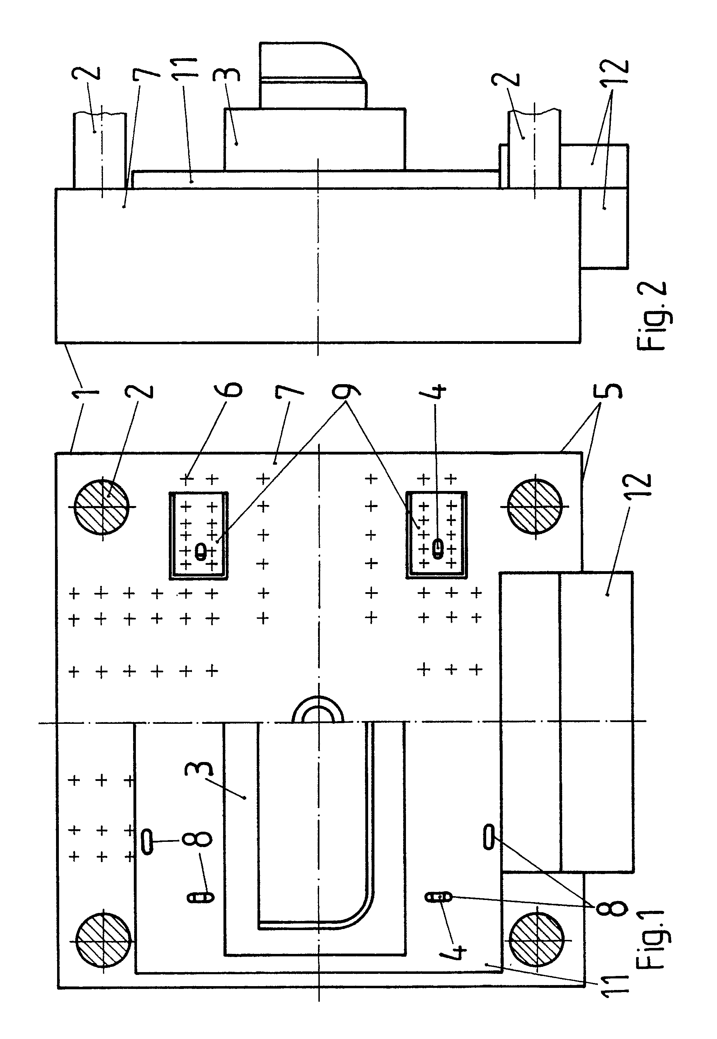

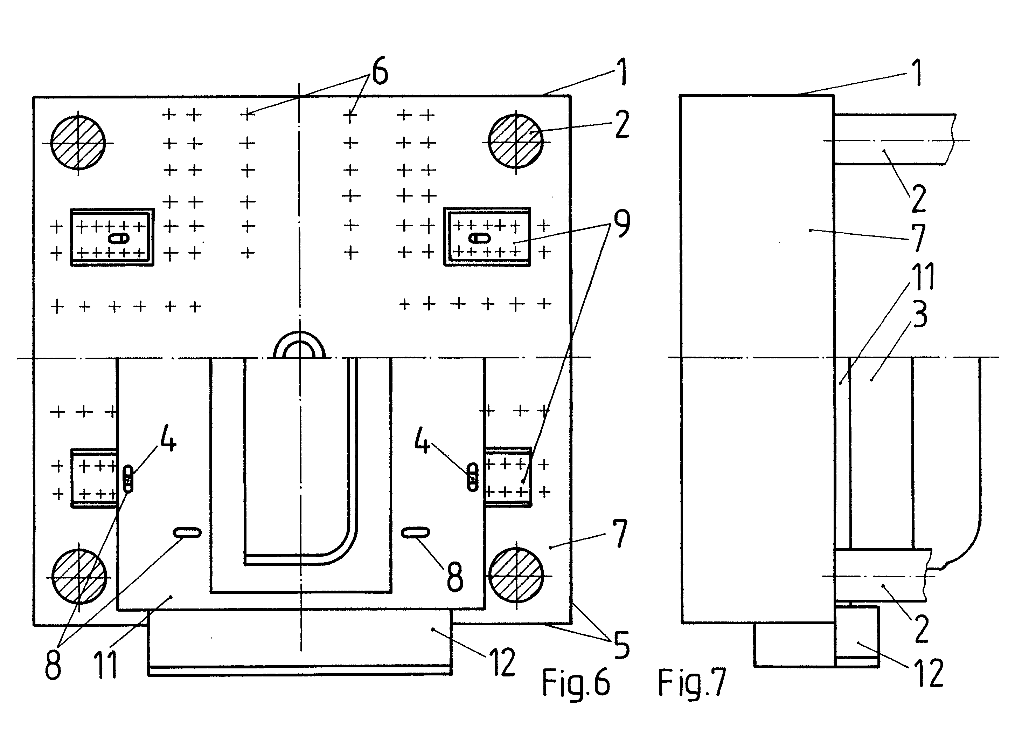

In den Figuren 1 und 2 ist eine Werkzeugaufspannplatte 1 in der Vorder- und Seitenansicht dargestellt, die mit einer zweiten nicht dargestellten Werkzeugaufspannplatte durch Säulen 2 verbindbar oder verbunden ist. An der Werkzeugaufspannplatte 1 ist eine Hälfte eines Formwerkzeuges 3, das nur im Halbschnitt dargestellt ist, befestigt. Das Formwerkzeug 3 hat eine rechteckige Kontur, ragt in der Länge über den senkrechten Abstand, den die Säulen 2 zueinander haben, dazwischen hinaus und wurde in waagerechter Arbeitslage horizontal in den Werkzeugraum der Spritzgießmaschine eingebracht. Die Adapterplatte 11, auf der das Formwerkzeug 3 befestigt ist, stützt sich auf einer an sich bekannten und nicht näher erläuterten höhenverstellbaren Auflage 12 oder einem entsprechenden Podest ab, die bzw. das zur horizontalen Lagefixierung des Formwerkzeuges dient. Mindestens vier Spannkeile 4 sind unter einem Neigungswinkel α in jeder Werkzeugaufspannplatte 1 parallel zu zwei gegenüberliegenden Außenkanten 5 im Rastermaß des Euromap-Bohrbildes 6 bündig zur Aufspannfläche 7 eingelassen. In Figur 1 und 6 ist eine bevorzugte Ausführungsform dargestellt, bei der die Spannkeile 4 und die dazugehörigen Antriebe 10 in quaderförmigen Bausteinen 9 integriert sind, die ihrerseits bündig zur Aufspannfläche 7 in der Werkzeugaufspannplatte 1 eingelassen sind. An den Aufspannflächen 7 der Formwerkzeuge 3 bzw. der Adapterplatten 11 sind mindestens zwei Keilnuten 8 unter dem gleichen Neigungswinkel α parallel zu jeder Außenkante der Werkzeugaufspannplatte 1 so angeordnet, daß die durch die Antriebe 10 ausfahrbaren Spannkeile 4 in die Keilnuten 8 einfahrbar sind.

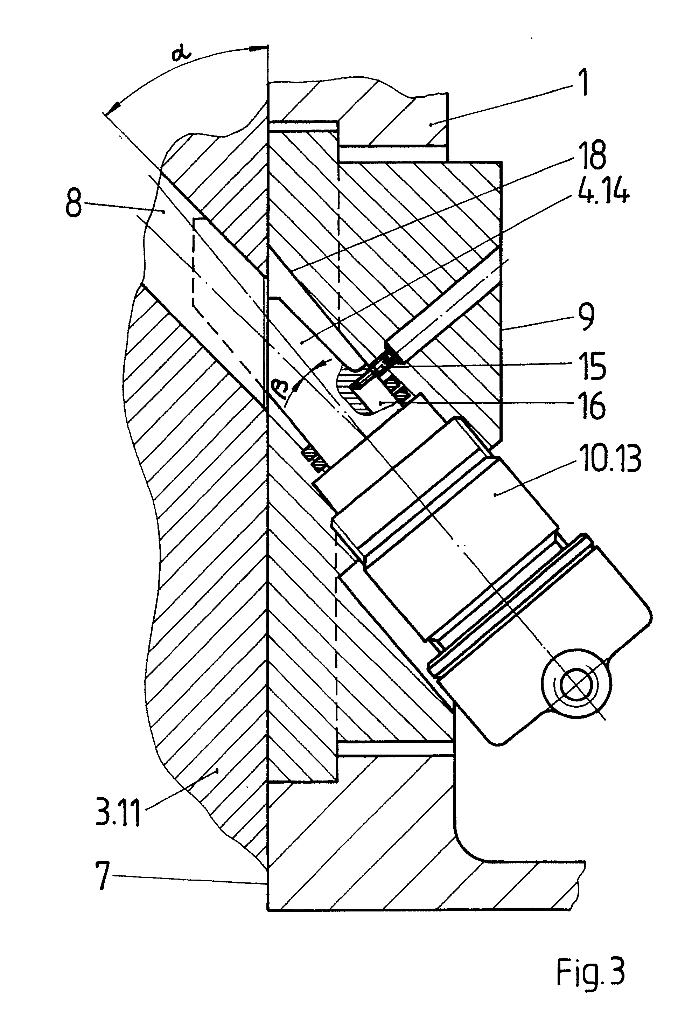

In Figur 3 ist in einer vergrößerten Schnittdarstellung durch einen Baustein die Anordnung des Bausteines 9 mit Spannkeil 4 und Antrieb 10 in der Werkzeugaufspannplatte 1 und das an der Werkzeugaufspannplatte anliegende Formwerkzeug 3, bzw. dessen Adapterplatte 11, erkennbar. Deutlich sichtbar ist, daß der Baustein 9 und der Spannkeil 4, der dich noch in der eingefahrenen Stellung befindet, bündig mit der Aufspannfläche 7 der Werkzeugaufspannplatte 1 abschließen und diese nicht überragen, wodurch ein problemloses Einbringen des Formwerkzeuges 3 in jeder Arbeitslage und Einbringrichtung in den Werkzeugraum möglich ist. In der gestrichelten Darstellung wurde der Spannkeil 4 mit Hilfe des Antriebes 10, der vorzugsweise als hydraulischer Arbeitszylinder 13 ausgebildet ist, in die Keilnut 8 in der Adapterplatte 11 bzw. im Formwerkzeug 3 ausgefahren. Das äußere Ende der Kolbenstange 14 vom Arbeitszylinder 13 ist gleichzeitig als Spannkeil 4 ausgebildet. Durch eine Verdrehsicherung 15, die im Baustein 9 angeordnet ist und in eine Führungsnut 16, die sich in der Kolbenstange 14 befindet, eingreift, wird die Lage des Spannkeils 4 zur Keilnut 8 fixiert. Der Baustein 9 ist durch nicht dargestellte Befestigungsschrauben mit der Werkzeugaufspannplatte lösbar verbunden.

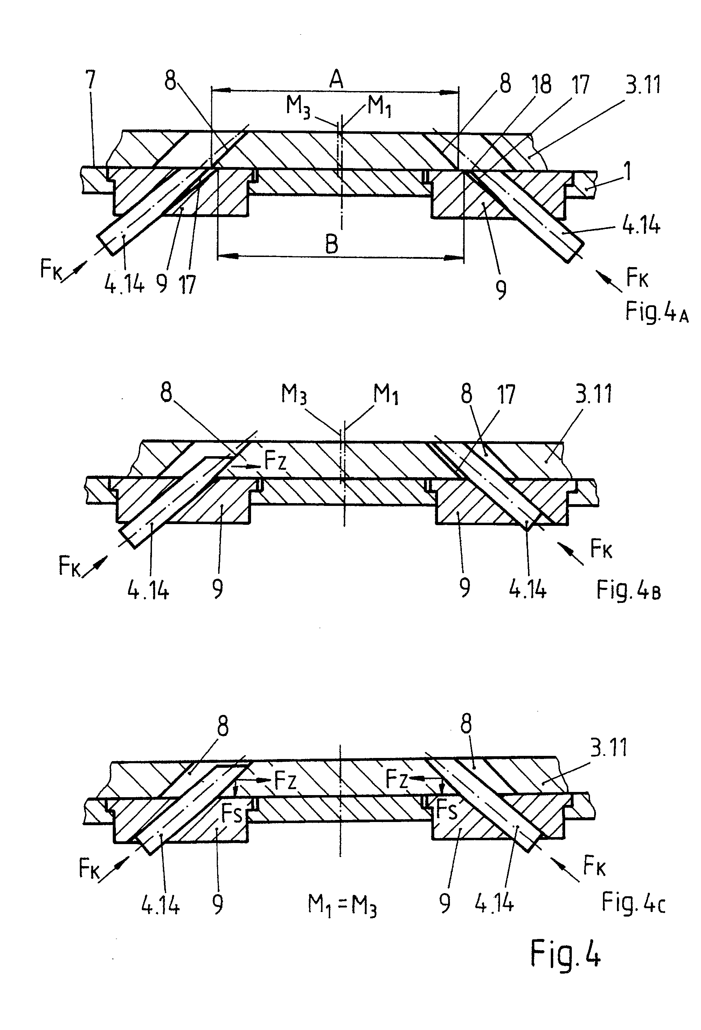

In Figur 4 ist der Spannvorgang eines Formwerkzeuges 3 schematisch in drei Stufen dargestellt. Die Figur 4A zeigt den Zustand, in dem sich das Formwerkzeug 3 bzw. die Adapterplatte 11, bezogen auf die Werkzeugaufspannnplatte 1, in einer vorzentrierten Lage befindet. Diese vorzentrierte Lage macht es erforderlich, daß die Innenseiten der Keilnuten 8 des Formwerkzeuges 3 bzw. der Adapterplatte 11, die an der Aufspannfläche 7 zur Anlage kommen und durch den Abstand A gekennzeichnet sind, nicht über die Keilspannflächen 17 der Spannkeile 4 hinausragen dürfen. Erkennbar ist, daß die Mitte M1 der Werkzeugaufspannplatte 1 mit der Mitte M3 des Formwerkzeuges 3 nicht übereinstimmt. Eine weitere Bedingung für die Gewährleistung des Zentrier- und Spannvorganges ist, daß der innere Abstand B der Keilnuten 18 an der Aufspannfläche 7 der Werkzeugaufspannplatte 1 bzw. der Bausteine 9 kleiner als der Abstand A sein muß. Für den Zentrier- und Spannvorgang werden die Spannkeile 4 durch die Kolbenstangen 14 der Arbeitszylinder 13 mit einer Antriebskraft FK beaufschlagt. Das Herausfahren der Kolbenstangen 14 aus der Werkzeugaufspannplatte 1 ist in Figur 4B dargestellt, wobei die rechte Kolbenstange 14 mit Spannkeil 4 unmittelbar in ihre Endstellung ausfährt, ohne daß die Keilspannfläche 17 zur Anlage kommt. Gleichzeitig kommt die linke Kolbenstange 14 mit dem Spannkeil 4 an der Keilnut des Formwerkzeuges 3 oder der Adapterplatte 11 zur Anlage. Dabei wird auf das Formwerkzeug 3 eine Querkraft FZ wirksam, durch die, wie aus Fig.4C ersichtlich ist, bei weiterem Herausfahren der Kolbenstange 14 das Formwerkzeug 3 oder die Adapterplatte 11 horizontal zentriert wird. Nachdem beide Keilspannflächen 17 an den Keilnuten 8 zur Anlage gebracht worden sind, wird die Spannkraft FS aufgebaut, die senkrecht gegen die Werkzeugaufspannplatte 1 und damit annähernd entgegengesetzt zur Antriebskraft FK gerichtet ist. Durch die Querkräfte FZ kann keine Bewegung des Formwerkzeuges 3 oder der Adapterplatte 11 mehr erfolgen, da sie sich in ihrer Wirkung aufheben. In dieser Lage stimmt die Mitte M1 der Werkzeugaufspannplatte 1 mit der Mitte M3 des Formwerkzeuges 3 überein.

Die Positioniergenauigkeit beim Werkzeugwechsel ist dabei abhängig von der Differenz die das Maß A zum Maß B aufweist.

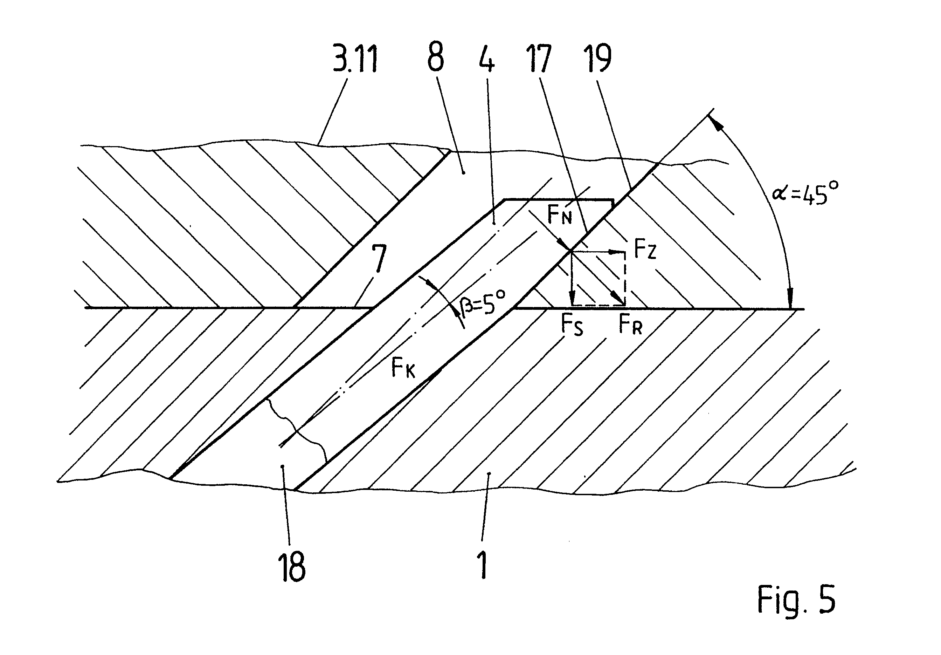

In Figur 5 sind die beim Zentrier- und Spannvorgang wirkenden Kräfte in einer vergrößerten Teilansicht dargestellt. Auf den Spannkeil 4 wirkt die Antriebskraft FK, die durch den Neigungswinkel $\beta$, der um ca. 5° geneigten Keilspannfläche 17, auf die Spannfläche 19 der Keilnut 8 in dem Formwerkzeug 3 bzw. der Adapterplatte 11 in dem Moment übertragen wird, wo diese zur Anlage kommen. Dabei erfolgt eine Kraftumlenkung um 90°, wobei die auf die Spannfläche 19 der Keilnut 8 wirkende Normalkraft FN sich in die horizontal wirkende Kraft FZ, die zur Zentrierung des Formwerkzeuges 3 dient, und in eine vertikal gerichtete Kraft FS, die die Spannkraft aufbringt, zerteilt. Zu beachten ist, daß der Neigungswinkel der Keilnuten 18 zur Aufnahme der Spannkeile 4, in den Werkzeugaufspannplatten 1 bzw. in den Bausteinen 9, zur Gewährleistung der Selbsthemmung für den Spannvorgang, um die Größe des Neigungswinkels $\beta$ gegenüber dem Neigungswinkel $\alpha$ differieren muß.

Die Figur 6 und 7 zeigen abweichend von Figur 1 und 2 die gleiche Hälfte des Formwerkzeuges 3 mit langgestreckter rechteckiger Kontur im Halbschnitt. Das Formwerkzeug 3 wurde nicht in horizontaler sondern in vertikaler Arbeitslage in den Werkzeugraum eingebracht und vertikal an der Werkzeugaufspannplatte 1 der Spritzgießmaschine befestigt. Zu diesem Zweck muß vor dem Werkzeugwechsel die höhenverstellbare Auflage 12 auf die vertikale Einbauhöhe des Formwerkzeuges 3 vorpositioniert werden. Die Lage der in der Werkzeugaufspannplatte 1 integrierten Bausteine 9 mit den Spannkeilen 4 und den dazugehörigen Antrieben ist unverändert geblieben. Die ausfahrbaren Spannkeile 4 wurden jedoch nicht in die Keilnuten 8, die sich an der kurzen Seite der Adapterplatte 11 befinden, sondern in die Keilnuten 8, die sich an der langen Seite der Adapterplatte 11 befinden, eingefahren. Zur Gewährleistung des Formwerkzeugwechsels aus unterschiedlichen Arbeitslagen und Einbringrichtungen ist es notwendig, daß zur Anzahl, der Spannkeile 4 in der Werkzeugaufspannplatte 1, in der Adapterplatte 11 bzw. im Formwerkzeug 3 die doppelte Anzahl Keilnuten 8 im entsprechenden Rastermaß des Euromap-Bohrbildes korrespondierend zu den Spannkeilen vorhanden ist. Diese doppelte Anzahl ergibt sich zwangsläufig durch die parallele Anordnung von mindestens zwei Keilnuten 8 an den Aufspannflächen 7 der Formwerkzeuge 3 bzw. der Adapterplatten 11 parallel zu jeder Außenkante 5 der Werkzeugaufspannplatte. Daraus resultiert, daß immer nur die halbe Anzahl der vorhandenen Keilnuten 8 für den Spannvorgang funktionswirksam wird und bei einer um 90° veränderten Einbaulage des Formwerkzeuges 3 die nicht genutzten Keilnuten 8 funktionswirksam werden.

Die Selbsthemmung der hergestelltlen Spannverbindung tritt ein, wenn die Keilspannflächen 17 der Spannkeile 4 um ca 5° zur Verschieberichtung geneigt sind. Desweiteren ist es vorteilhaft, wenn die Keilspannflächen 17 der Spannkeile 4 und der Keilnuten 8 vorzugsweise unter einem Neigungswinkel α, der im Bereich von 45° liegen sollte, geneigt sind, weil sich dadurch eine günstige Kraftaufteilung für den Zentrier- und Spannvorgang ergibt, wie aus Figur 4C und Figur 5 erkennbar ist.

Aufstellung der verwendeten Bezugszeichen

1 - Werkzeugaufspannplatte
2 - Säule
3 - Formwerkzeug
4 - Spannkeil
5 - Außenkante
6 - Rastermaß Euromap-Bohrbild
7 - Aufspannfläche
8 - Keilnut
9 - Baustein
10 - Antrieb
11 - Adapterplatte
12 - Auflage
13 - Arbeitszylinder
14 - Kolbenstange
15 - Verdrehsicherung
16 - Führungsnut
17 - Keilspannfläche
18 - Keilnut
19 - Spannfläche
A - Innenabstand der Keilnuten im Formwerkzeug/Adapterplatte an der Aufspannfläche
B - Innenabstand der Keilnuten in der Werkzeugaufspannplatte an der Aufspannfläche
FS - Spannkraft
FK - Antriebskraft
FZ - Querkraft
FN - Normalkraft
M1 - Mitte Werkzeugaufspannplatte
M3 - Mitte Formwerkzeug
α - Neigungswinkel der Keilnuten und der Keilspannflächen
β - Neigungswinkel der Keilspannfläche zur Verschieberichtung des Spannkeiles

**Patentansprüche**

1. Einrichtung zum horizontalen Zentrieren und selbsthemmenden Spannen von Formwerkzeugen, die in horizontaler oder vertikaler Arbeitslage horizontal oder vertikal in den Werkzeugraum einer Spritzgießmaschine eingebracht werden, der von einer festen und einer beweglichen Werkzeugaufspannplatte begrenzt wird, die durch in den Werkzeugaufspannplatten gelagerte Säulen verbindbar oder verbunden sind und durch Antriebe bewegte Spannkeile, die in den Werkzeugaufspannplatten eingelassen sind, die Formwerkzeuge an den Werkzeugaufspannplatten lösbar befestigt werden, dadurch gekennzeichnet, daß
   - mindestens vier Spannkeile (4) unter einem Neigungswinkel (α) in den Werkzeugaufspannplatten (1) parallel zu zwei gegenüberliegenden Außenkanten (5) im Rastermaß des Euromap-Bohrbildes (6) bündig zur Aufspannfläche (7) eingelassen sind und
   - an den Aufspannflächen (7) der Formwerkzeuge (3) bzw. der Adapterplatten (11) mindestens zwei Keilnutenn (8) unter dem gleichen Neigungswinkel (α) parallel zu jeder Außenkante (5) der Werkzeugaufspannplatten (1) so angeordnet sind, daß die durch Antriebe (10 ) ausfahrbaren Spannkeile (4) in die Keilnuten (8) einfahrbar sind.

2. Einrichtung nach Anspruch 1, dadurch gekennzeichnet, daß die Spannkeile (4) und die Antriebe (10) in quaderförmigen Bausteinen (9) integriert sind, die parallel zu den Außenkanten (5) der Werkzeugaufspannplatten (1) bündig zur Aufspannfläche (7) darin befestigt sind.

3. Einrichtung nach Anspruch 1 und 2 dadurch gekennzeichnet, daß die Keilspannflächen (17) an den Spannkeilen (4) um einen Neigungswinkel β von ca. 5° zur Verschieberichtung geneigt sind.

4. Einrichtung nach Anspruch 1 bis 3, dadurch gekennzeichnet, daß die Keilspannflächen (17) der Spannkeile (4) und der Keilnuten (8) vorzugsweise unter einem Neigungswinkel $\alpha$, im Bereich von 45° zu den Werkzeugaufspannplatten (1) geneigt sind.

Fig. 2

Fig. 1

Fig. 3

Fig.4A

Fig.4B

Fig.4C

Fig.4

Fig. 5

Fig.7

Fig.6